# EUROPEAN PATENT APPLICATION

(11) **EP 4 310 634 A1**
(43) Date of publication of application: **24.01.2024**
(21) Application number: 22186095.0
(22) Date of filing: 20.07.2022
(51) Int. Cl.: G06F 3/01, G06V 40/16, G10L 13/08, G10L 25/63

(54) **SELECTING REACTIONS TO MESSAGES**

(71) Applicant: Nokia Technologies Oy, 02610 Espoo (FI)
(72) Inventor: Wright, Christopher, London, E15 4AD (GB); Cronin, Harry, Cambridge, CB1 3DE (GB); McDonald, Rory, Cambridge, CB22 4PN (GB)
(74) Representative: Swindell & Pearson Limited

(57) **Abstract**

Examples of the disclosure relate to apparatus, methods and computer programs that can be used to help a user select a reaction for a message. In examples of the disclosure a received message is analysed to determine one or more predicted reactions of a user to the message. Information relating to one or more detected facial characteristics of the user can then be obtained. The information relating to the one or more detected facial characteristics can be obtained from at least one sensor that is configured to monitor a part of the user's head or face wherein the part does not comprise a complete facial feature. The information relating to the one or more facial characteristics is compared to information indicative of the predicted reactions and a reaction is selected from the one or more predicted reactions based on the comparison.

## Description

### TECHNOLOGICAL FIELD

Examples of the disclosure relate to selecting reactions to messages. Some relate to selecting reactions to messages using detected facial characteristics.

### BACKGROUND

Users can receive messages using mobile phones or other communications devices. Users can react to these messages by selecting a reaction which can indicate their response to the message. The response can be displayed as a small graphical item such as an emoji.

### BRIEF SUMMARY

According to various, but not necessarily all, examples of the disclosure there is provided an apparatus comprising means for:
analysing a received message to determine one or more predicted reactions of a user to the message;
obtaining information relating to one or more detected facial characteristics of the user wherein the information relating to the one or more detected facial characteristics is obtained from at least one sensor that is configured to monitor a part of the user's head or face wherein the part does not comprise a complete facial feature;
comparing the information relating to the one or more facial characteristics to information indicative of the predicted reactions; and
selecting a reaction from the one or more predicted reactions based on the comparison.

The means may be for enabling information indicative of the selected reaction to be transmitted.

The information relating to one or more facial characteristics of the user may be obtained from one or more sensors configured to monitor an acoustic response of the user's ear canal.

The acoustic response may be obtained in response to a reference signal and wherein the reference signal is adapted to facilitate differentiation of different facial expressions.

The information relating to one or more facial characteristics of the user may be obtained from one or more sensors configured to obtain an image of part of a user's face.

The one or more facial characteristics may comprise one or more of:
the position of one or more facial features;
relative distances between two or more facial features;
movement of one or more facial features;
changes in size of one or more facial features;
changes in shape of one or more facial features.

Analysing the received message to determine one or more predicted reactions may comprise analysing one or more of:
content of the message;
sender of the message;
previous responses to messages.

The means may be for determining expected facial characteristics associated with the predicted reactions.

The information relating to the one or more facial characteristics to information indicative of the predicted reactions may comprise comparing detected facial characteristics of the user with the expected facial characteristics associated with the predicted reactions.

The selected reaction may be represented as a graphical response to the message.

The means may be for determining if there is a correlation between the predicted reaction and the detected facial characteristics and if there is a sufficient correlation selecting the corresponding reaction and if there is not a sufficient correlation not making a selection of a predicted reaction.

According to various, but not necessarily all, examples of the disclosure there is provided a device comprising an apparatus as claimed in any preceding claim wherein the device is at least one of: a telephone, a camera, a computing device, a teleconferencing device, a virtual reality device, an augmented reality device, a headset.

According to various, but not necessarily all, examples of the disclosure there is provided a method comprising:
analysing a received message to determine one or more predicted reactions of a user to the message;
obtaining information relating to one or more detected facial characteristics of the user wherein the information relating to the one or more detected facial characteristics is obtained from at least one sensor that is configured to monitor a part of the user's head or face wherein the part does not comprise a complete facial feature;
comparing the information relating to the one or more facial characteristics to information indicative of the predicted reactions; and
selecting a reaction from the one or more predicted reactions based on the comparison.

According to various, but not necessarily all, examples of the disclosure there is provided a computer program comprising instruction which, when executed by an apparatus, cause the apparatus to perform at least:
analysing a received message to determine one or more predicted reactions of a user to the message;
obtaining information relating to one or more detected facial characteristics of the user wherein the information relating to the one or more detected facial characteristics is obtained from at least one sensor that is configured to monitor a part of the user's head or face wherein the part does not comprise a complete facial feature;
comparing the information relating to the one or more facial characteristics to information indicative of the predicted reactions; and
selecting a reaction from the one or more predicted reactions based on the comparison.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example system;
FIG. 2 shows an example method;
FIG. 3 shows another example system;
FIG. 4 shows an example in use; and
FIG. 5 shows an example apparatus.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

Examples of the disclosure relate to apparatus, methods and computer programs that can be used to help a user select a reaction for a message. For instance, if a user is browsing on social media or if they are communicating using a chat or messaging application, they may have the functionality to select reactions in response to the messages. For example, they could select a reaction to indicate that they like a message or that they do not like a message. An appropriate icon indicative of the selected response can be displayed in association with the message.

Such reactions are straightforward for a user to select if they have a user interface such as a touch screen or a keyboard that they can use. It can be more complicated for a user to select reactions for response to messages if such a user interface is not available to them. For example, if they are listening to the messages using an earpiece or if they are viewing messages using a headset.

Examples of the disclosure enable the reactions to be selected by monitoring part of the user's face or head to determine a facial characteristic and correlating this with an expected response to the message to enable a reaction to be selected without a specific input from the user. Also examples of the disclosure can use facial characteristics obtain from just a part of the user's head or face. This avoids the needs to monitor the whole of the user's face.

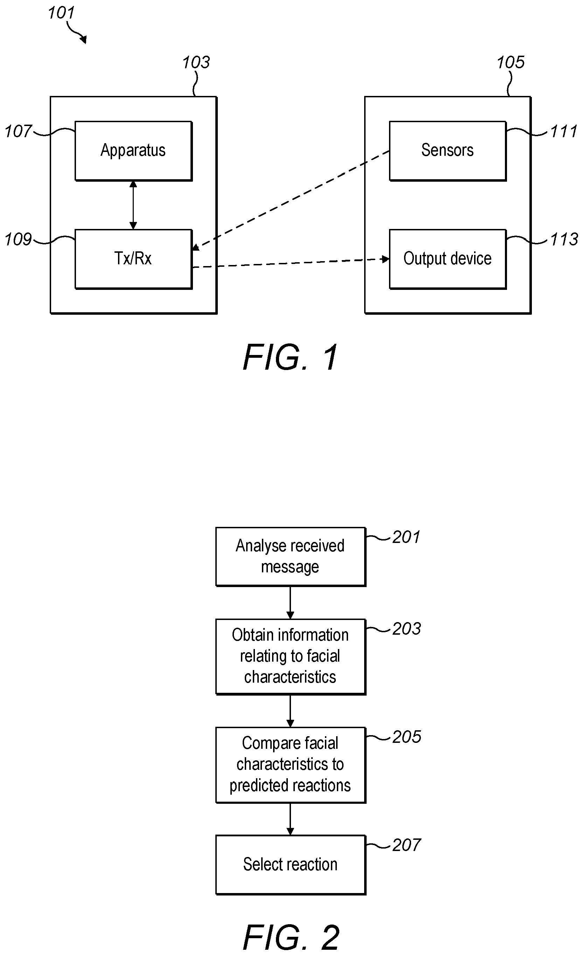

Fig. 1 shows an example system 101 that could be used to implement examples of the disclosure. In this example the system 101 comprises a communications device 103 and a peripheral device 105. In the example of Fig. 1 only one communication device 103 and one peripheral device 105 are shown. Other numbers of communications devices 103 and peripheral devices 105 could be used in other examples.

The communications device 103 could be a mobile phone, a camera, a computing device, a teleconferencing device, a virtual reality device, an augmented reality device or any other suitable type of device. The communications device 103 can be configured to provide outputs to and/or receive inputs from one or more peripheral devices 105.

The example communications device 103 comprises an apparatus 107, and a transmitter/receiver 109. Only components of the communications device 103 that are referred to in the following description are shown in Fig.1. Additional components could be provided in some examples of the disclosure. For instance, the communications device 103 could comprise a power source, a user interface or any other suitable components.

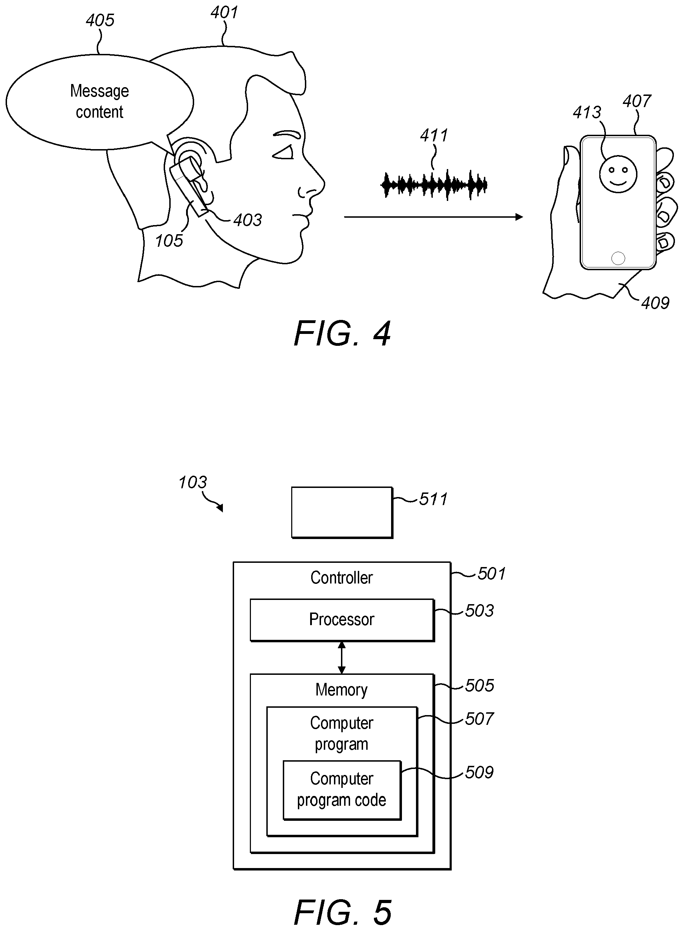

The apparatus 107 can comprise a controller comprising a processor and memory. Examples of an apparatus 107 are shown in Fig. 5. The apparatus 107 can be configured to enable control of the communications device 103. For example, the apparatus 107 can be configured to control the functions that are performed by the communications device 103. The apparatus 107 can also be configured to remotely control one or more functions of the peripheral device 105.

The transmitter/receiver 109 can comprise any means that enables the communications device 103 to participate in communication sessions. The transmitter/receiver 109 can enable the communications device 103 to communicate in communications networks. The communications networks can be wired and/or wireless communications networks.

The transmitter/receiver 109 can be configured to enable communications between the communications device 103 and one or more peripheral devices 105. The communications between the communications device 103 and one or more peripheral devices 105 can be via wireless communication links. The wireless communication links could comprise short range communication links such as Bluetooth, Bluetooth Low Energy, Bluetooth Smart, 6LoWPan (IPᵥ6 over low power personal area networks) ZigBee, ANT+, near field communication (NFC) or any suitable type of communication link or combination of communication links.

The transmitter/receiver 109 can be configured to receive message data from external devices. For example, the transmitter/receiver 109 can be configured to enable the communications device 103 to be used to access a messaging function in which the user can exchange text content with other users or to access social media applications or to access any other suitable messaging function.

The transmitter/receiver 109 can also be configured to send message data to the peripheral device 105. This can enable the message to be rendered by the peripheral device 105 for the user. The transmitter/receiver 109 can also be configured to receive data from the peripheral device 105. For example, the transmitter/receiver 109 can be configured to receive data relating to detected facial characteristics from the peripheral device 105.

The peripheral device 105 could be an earpiece, a head set or any other suitable type of device. The peripheral device 105 can be configured to provide outputs to and/or receive inputs from one or more communications devices 103.

The example peripheral device 105 comprises an output device 113 and one or more sensors 111. Only components of the peripheral device 105 that are referred to in the following description are shown in Fig.1. Additional components could be provided in some examples of the disclosure. For instance, the peripheral device 105 could comprise a power source, or any other suitable components.

The output device 113 of the peripheral device 105 can comprise any suitable means that can be configured to provide outputs for a user. Different types of output devices 113 can be used in different types of peripheral devices 105. The different types of output devices 113 can enable the outputs to be provided in different formats. For instance, in some examples the peripheral device 105 could be an ear piece which is configured to be worn inside an ear of a user. The ear piece could comprise one or more loudspeakers that can be configured to generate audio outputs for the user. The loudspeakers can be configured to convert an electrical input signal to an audio output. The audio output can comprise a sound signal. The audio outputs could comprise audio renderings of messages or other content from the communications device 103.

In some examples the peripheral device 105 could be a headset that could comprise one or more near eye displays. For instance, the peripheral device 105 could be smart glasses that could comprises lenses that enable information to be displayed to the user. Other types of output devices 113 could be used in other examples.

The sensors 111 can comprise any means that can be configured to detect facial characteristics of a user of the communications device 103. The type of sensors 111 that are used can depend on the type of facial characteristic that is to be monitored, the type of peripheral device 105 that is being used and/or any other relevant factors.

The sensors 111 can be configured to monitor part of the user's face or head. For example, the sensors 111 only need to monitor a small part of the user's face or head and not all of the user's face or head. The part that is monitored does not need to comprise a complete facial feature. The facial features could be eyes, mouth, ears, nose or other key features of the face. The sensors can be configured to monitor just a part of such features, for example, they could monitor the ear canal. The sensors 111 could be configured to monitor a small area around a feature, for example the skin in the corner of the eyes or the corner of the mouth could be monitored rather than the whole eyes or mouth.

In some examples the sensors 111 could comprise means for detecting acoustic data. The sensors 111 could be configured to detect acoustic data from a user's ear canal or from any other suitable location. For instance, the sensors 111 could comprise one or more microphones. The microphones could be positioned in (or on) an ear piece so that an acoustic response of the user's ear canal can be detected. The acoustic response can be detected in response to a reference acoustic output signal that could be provided by the earpiece. The acoustic response can be detected by playing a reference acoustic output using a loudspeaker and detecting the response using a microphone. The reference acoustic output could be an ultrasound signal or a non-speech frequency signal or other suitable signal so as to reduce interference with any audio content that is being played back to the user. The microphone can be configured to detect data that indicates changes in the acoustic response of the user's ear canal. The changes can be caused by a user changing their facial expression. This movement of the user's face would cause a change in the size and/or shape the user's ear canal which could be detected by monitoring the acoustic response of the ear canal.

In some examples the sensors 111 could be part of an imaging device. The imaging device can comprise any means for capturing an image. The imaging device can comprise one or more cameras or any other suitable means for capturing images. The sensors 111 used in an imaging device can be any suitable type of sensor that can be configured to detect images. For instance, the sensor of the imaging device can comprise a digital image sensor such as a charge-coupled-device (CCD) or a complementary metal-oxide-semiconductor (CMOS).

The imaging device could be located in any suitable position on the peripheral device 105. For instance, if the peripheral device comprises a near eye display the imaging device could be positioned close to the near eye display so as to enable eye tracking or any other suitable function. In such cases the imaging device could be position in the peripheral device so that it can capture images of a user's eye. This imaging device could also capture images comprising some of the region around the user's eye. In some examples an imaging device could be positioned on an ear piece and configured to obtain an image of part of the user's face.

The sensors 111 could be configured to perform different functions during different use scenarios of the system 101. For instance, in examples of the disclosure the sensors 111 can be configured to detect facial characteristics of the user's face. In other scenarios the same sensors 111 could be used to detect the performance of the device, how the user is using the device or any other suitable information.

Examples of the disclosure can be implemented using variations of the system 101 shown in Fig. 1. For example, the apparatus 107 could be in the peripheral device and the peripheral device 105 could perform all of the analysis of the detected facial characteristics and received messages. In some examples the sensors 111 and output devices 113 could all be in the same communications device 103, for example an augmented reality headset could have sensors 111 positioned close to the user's face.

Fig. 2 shows an example method that could be implemented using the system 101 of Fig. 1 or any other suitable system 101. The example method could be performed by the apparatus 107 or by any other suitable part of the system 101.

The method comprises, at block 201, analysing a received message to determine one or more predicted reactions of a user to the message.

The message could be a message that is received from an entity outside of the system 101. The message could be received as part of a messaging application such as chat function, a social media application, a text message service or any other suitable application.

In some examples the message could comprise text content. The text content can be rendered to the user as text. For example, the text can be displayed on a near eye display or other suitable display. In some examples the text content of the message could be converted to another format before it is provided to the user. For example, the text could be converted to an audio output.

In some examples the message could comprise audio content. For instance, the message could comprise a voice note or any other suitable audio content.

In examples of the disclosure the message can be rendered for the user using any suitable means. For example, the message data could be provided to a peripheral device 105 to enable audio content of the message to be played back by an ear piece or to enable text or graphic content to be displayed on a near eye display. Other means for rendering the message content for the user could be used in other examples.

The reaction to the message can be a selected indication that indicates an emotional response of the user to the message. For instance, it can indicate that the user is happy, sad, laughing or experiencing any other relevant emotion. In some examples the reaction could also be a response to the user of the original sender of the message such as an indication of praise or any other suitable response.

The reaction can be represented by a graphical item. For example, the reaction could be represented by an emoji or other similar graphical item.

The analysis of the message can comprise analysing one or more of, content of the message, sender of the message, previous reactions to messages and/or any other suitable information. For instance, in some examples the analysis of the message can comprise monitoring the content of the message to identify any information that indicates a possible emotional reaction. For example, key words or phrases in a message could indicate a happy message or a sad message. The sender of a message could also indicate how a user might be expected to react to a message. A user might react differently to messages from their friends or family to messages received from work colleagues. The analysis of the message could also comprise analysing previous reaction made by the user. For instance, if the user reacts to a lot of messages with a smiley face this could be taken into account. Other information could also be used when analysing the messages to predict a reaction of the message to the user.

Any suitable means can be used to analyse the received message. In some examples machine learning could be used to analyse the received messages. In some examples a classification algorithm could be used. For instance, the content of a message could be analysed using a natural language classification algorithm to determine a tone or emotional context of the message.

At block 203 the method comprises obtaining information relating to one or more detected facial characteristics of the user.

The facial characteristics can comprise any features of a user's head or face that might change as the user's facial expression changes. These can be external characteristics such as the user's face, or internal characteristics, such as the user's ear canal or a combination of these.

The detected facial characteristics could comprise any one or more of; the position of one or more facial features, relative distances between two or more facial features, movement of one or more facial features, changes in size of one or more facial features, changes in shape of one or more facial features; changes in skin tone, and/or any other suitable characteristic.

The facial features can comprise features that change as a user's facial expression changes. A user's facial expression can change by the user moving muscles within their face. For example, a user can smile or frown which would cause movement of the muscles around the mouth and/or eyes. This movement of the muscles would also cause changes in the position of facial features on the user's skin. For example, it could change the appearance of fine lines and wrinkles and/or it could change the positions of freckles or other marks on the user's face. In some examples the facial features could be internal features such as the user's canal. The size and/or shape of the user's ear canal could change as the user changes their facial expression.

Other types of facial characteristics could be detected in other examples of the disclosure. For instance, the user's skin tone could be detected. This could give an indication of whether or not a user is blushing or flushed. This can give more information about a user's emotional context.

The information relating to the one or more detected facial characteristics is obtained from at least one sensor 111 that is configured to monitor a part of the user's head or face. The sensor 111 could be configured to monitor part of a user's head or face. For instance, the sensor 111 could be configured to monitor part of the user's head or face but not all of it.

The sensors 111 of the peripheral device 105 can be configured to detect such facial characteristics. In some examples the sensors 111 could be configured to detect changes in the facial characteristics, for example it could detect a change in the acoustic response of the ear canal. In some examples the sensors 111 could be configured to detect particular configurations of the facial characteristics. For example, a particular configuration of the fine lines or markings could be known to correspond to a particular facial expression or emotional context.

The sensor 111 could be configured to monitor part of a user's head or face. For instance, the sensor 111 could be configured to monitor part of the user's head or face but not all of it. For instance, the sensors 111 that monitor the acoustic response of the ear canal would not monitor other parts of the user's face. Or, if cameras are used to obtain images of the user's face these images could be of a small part, such as the region close to the ear or the region around the eye rather than of the whole of the user's face.

The information relating to the one or more detected facial characteristics might not be sufficient, on its own, to accurately and/or consistently predict an emotional context of the user. That is the information might provide a partial indication of the emotional response of the user but might not be accurate enough to predict a reaction without further information.

At block 205 the method comprises comparing the information relating to the one or more facial characteristics to information indicative of the predicted reactions. This can determine whether or not there is a correlation between the predicted reactions and the detected facial characteristics. This can determine if there is any correlation between an expected reaction and a detected, or partially detected, reaction.

In some examples facial characteristics associated with the predicted reactions can be obtained. For instance, if one of the expected reactions is sad then the expected facial characteristics for a sad facial expression can be determined and if one of the expected reactions in angry then the expected facial characteristics for an angry facial expression can be determined. This information could be stored in a database that is accessible to the apparatus 107. The information can therefore be obtained by accessing the database.

In these examples the comparing of the information relating to the one or more facial characteristics to information indicative of the predicted reactions can comprise comparing detected facial characteristics of the user with the expected facial characteristics associated with the predicted reactions

At block 207 the method comprises selecting a reaction from the one or more predicted reactions based on the comparison. For example, apparatus 107 can determine if there is sufficient correlation between the predicted reaction and the detected facial characteristics. If there is a sufficient correlation then the corresponding reaction can be selected. If there is not a sufficient correlation then the reaction is not selected. If there is not a sufficient correlation between the detected characteristics and any of the predicted reactions then no reaction would be selected.

The selection can be automatic. That is, no user input or explicit user input is needed to select a reaction if there is a correlation between the detected facial characteristics and at least one of the predicted reactions.

Once a reaction has been selected information indicative of the selected reaction can be transmitted. The information can be transmitted as a response to the message. For example, the information indicative of the selected reaction could be transmitted to the sender of the message. This can cause a graphical item indicative of the reaction to be displayed on the device of the sender of the message or in any other suitable location.

Examples of the disclosure therefore enable a reaction to a message to be selected without requiring any specific user input. This is useful if the user is using peripheral devices to render the message or other devices with limited user interfaces. Examples of the disclosure use information relating to some detected facial characteristics in combination with an analysis of the received message to predict the reaction. The user of two different types of data can provide for an accurate and reliable way of selecting a reaction without using too many computational resources.

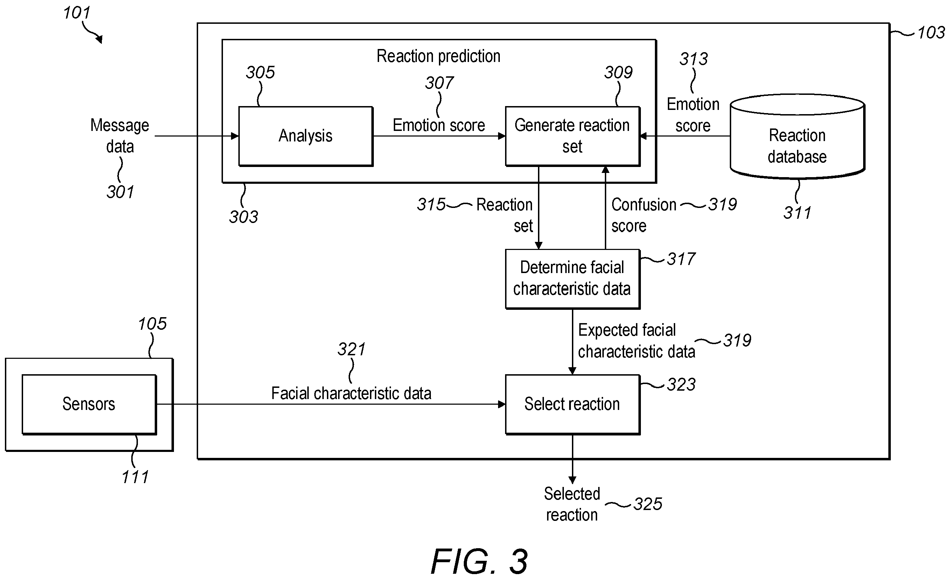

Fig. 3 shows another example system 101. This system 101also comprises a communications device 103 and a peripheral device 105. In this example the peripheral device 105 is an earpiece that is configured to provide audio outputs for a user. The communications device 103 could be a mobile phone or any other suitable type of device. Other types of devices and/or combinations of devices could be used in other examples.

The communications device 103 is configured to receive message data 301. The message data 301 can comprise text content, audio content, image content or any other suitable type of content. The message data 301 can be received as part of a messaging or communications application.

In some examples the message data 301 can comprise message content. The message content can be rendered for playback to a user of the communications device 103. The message content can be played back using the peripheral device 105 and/or any other suitable means. In some examples the message data 303 can comprise data relating to the sender or the message, data relating to previously received messages, and/or any other suitable data that might indicate how a user would react to the message.

In the example of Fig. 3 the message data is provided to a reaction prediction module 303. The reaction prediction modules 303 can be implemented using an apparatus 107 or any other suitable means.

The reaction prediction module 303 comprises an analysis block. 305. The received message data 301 is provided to the analysis block 305. The message data 301 can be provided in any suitable format to enable the relevant information to be analysed. In some examples the analysis could be text analysis. In such cases non-text content of the message could be converted to text for analysis. For instance, speech could be converted to text before being provided to the analysis block 305.

The analysis block 305 provides an emotion score 307 as an output. The emotion score can indicate an emotional context of the message. The emotion score 307 can comprise one or more numerical values indicative of the probability that a user receiving the message might experience one or more emotions. The emotion score 307 can indicate a plurality of different emotions. For instance, it could relate to more than one emotion and could have an indication of the probability that the respective emotions could be a response from the user.

The emotion score 307 can be provided to a generate reaction set block 309.

In the example of Fig. 3 the communications device 103 also comprises a reaction database 311. The reaction database 111 can be stored in a memory of the apparatus 101 or in any other suitable location. In other examples the reaction database 111 could be remote to the communications device 103 but could be accessed by the communications device 103 as required.

The reaction database 111 can comprise data relating emotional responses to reactions that can be used to respond to messages. In some examples the messaging application could enable a limited number of reaction responses to the message. The reaction database can have a record of these reactions and an indication of the emotion or emotions that would be associated with the reaction. For example, a reaction could be an emoji that could be designed to indicate a specific reaction. For instance, if the emoji comprises a smiley face a corresponding emotion would be happy. Another reaction could be a frowning face and a corresponding emotion could be angry or sad.

In the example of Fig. 3 the indication of the emotions that are associated with the respective reactions can comprise an emotion score 313. The emotion score 313 can be in the same format as the emotion score 307 obtained from the analysis of the message data 301 or could be in any other suitable format.

The generate reaction set block 309 obtains the emotion score 307 from analysis block 305 and the emotion scores 313 from the reaction database 311 and generates a set of reactions that correspond to the possible emotional response to the message. The reaction set 315 can be generated by finding reactions in the database 311 that have emotion scores 313 that correspond to the emotion score 307 from the analysed message data 301.

The generate reaction set block 309 provides a reaction set 315 as an output. The reaction set 315 can comprise one or more predicted reactions of a user to the message. In some examples the reaction set 315 could be a single predicted reaction. In other examples the reaction set 315 could comprise a plurality of possible predicted reactions.

In some examples the reaction set 315 can comprise a predefined number of reactions. For instance, the reaction prediction module 303 can be configured so that six reactions could be comprised within the reaction set 315. Therefore, the six reactions with the emotion scores 313 that best correspond to the emotion score from the analysed message data 301 could be used as the reaction set 315. Other numbers of reactions could be used in other example reaction sets 315. The number of reactions within the reaction set 315 can be determined based on the available number of reactions, the computational resources available to compare the reaction set 315 to detected facial characteristics and/or any other suitable factor or combination of factors.

The reaction set 315 is provided as an input to a determine facial characteristic data block 317. The determine facial characteristic data block 317 is configured to determine expected facial characteristic data for the respective reactions in the reaction set 315. The expected facial characteristic data can be an indication of the response that would be expected to be made the user's face and detected by the sensors 111.

For instance, if one of the reactions is happy the expected response of the user's face would be to smile. The facial characteristics corresponding to the user smiling could then be determined. These facial characteristics could be obtained from prior measurements of the user that have been stored in a suitable location or from data obtained from other users or from any other suitable source.

As a specific example, if the facial characteristic that is being monitored is the acoustic response of the user's ear canal then the sensors 111 can be used to measure the acoustic response of the user's ear canal. In such cases the determine facial characteristic data block 317 would be configured to determine the acoustic response that would be expected for the respective reactions in the reaction set 315. For instance if the reaction set comprises 315 a smiling reaction the acoustic response for the ear canal when the user smiles would be determined and if the reaction set comprises a user frowning the acoustic response for a user frowning would be determined.

Other types of facial characteristics could be used in other examples. For instance, if the sensor 111 is an image sensor that captures images of one or more facial features then the expected facial characteristic data 319 would comprise the expected configurations of the facial features when certain facial expressions are made.

The determine facial characteristic data block 317 can also be used to identify if there are any similarities between the expected facial characteristics. For instance, the expected facial characteristic data for a user smiling might be very similar to the expected facial characteristic data of a user laughing. It might not be possible, or it might be very computationally intensive, to differentiate between the facial characteristic data for these two responses. Therefore, the determined facial characteristic data block 317can generate a confusion score 319. The confusion score 319 can provide an indication of how likely two reactions could be confused with each other based on the facial characteristic data. If two reactions have a very low confusion score 319 then the expected facial characteristics are different enough that there is low probability of the being confused. If two reactions have a high confusion score 319 then the expected facial characteristics are similar and there is a high probability of them being confused. The confusion score gives an indication of how easily two or more facial characteristic data sets can be differentiated from each other.

If there is a high confusion score between facial characteristic data corresponding to two or more respective reactions then one or more of the reactions can be removed from the reaction set 315. The reaction that is removed from the reaction set 315 can be selected based on the comparison of the emotion score 307 from the analysis of the message and the emotions score 313 from the reaction database 311. The reaction with the higher correlation could be retained in the reaction set 315. The information relating to the confusion score 319 can also be fed back to the reaction prediction module 303. This information can be used for future occasions of predicting reaction of users to messages to avoid reactions with similar facial characteristics from being predicted as part of the reaction set 315. This helps to ensure that the reactions that are compared to the detected facial characteristic data are sufficiently distinguishable from each other to ensure that a reaction can be selected with a sufficient level of confidence.

Any suitable process can be used to determine the confusion score 319. For instance, in some examples a confusion matrix of a machine learning facial expression classification algorithm could be used. This could be an algorithm that is used to identify a facial expression from detected facial characteristic data 321. To determine the confusion score 319 the reactions can be analysed in pairs. The inverse of the confusion matrix can be used as pairwise scores for all of the possible reactions. These scores can be multiplied with scores from the reaction prediction module 303. For example, scores that correlate the respective emotion scores 307, 313. Subsequent pairs of reactions could then be compared by repeating the process including additional matrix multiplications for all existing reactions in the reaction set 315.

The determine facial characteristic data block 317 provides expected facial characteristic data 319 as an output. The expected facial characteristic data 319 can comprise data indicative of the facial characteristic data that would be detected if a user makes a facial response corresponding to the respective reactions in the reaction set 315. The expected facial characteristic data 319 can comprise any suitable data. In some examples the expected facial characteristic data 319 can comprise numerical values indicative of facial characteristics or changes in facial characteristics. As an example, if the, sensors 111 are detecting the response of the user's ear canal the expected facial characteristic data 319 can comprise data indicative of the expected acoustic responses for the emotions associated with the respective reactions.

The system 101 also comprises a peripheral device 105 comprising one or more sensors 111. The peripheral device 105 can be as shown in Fig. 1 and/or could be any other suitable type of peripheral device 105.

The sensors 111 can be configured to monitor one or more facial characteristics of the user. The facial characteristics can comprise any features of the face or head that might change when the user makes a facial expression. In some examples the facial characteristics could comprise the acoustic response of an ear canal, the positions of one or more features on the user's face and/or any other suitable characteristic or combination of characteristics.

The sensors 111 can provide facial characteristic data 321 as an output. The facial characteristic data 321 can be provided from the peripheral device 105 to the communications device 103. This can enable the communications device 103, or an apparatus 107 within the communications device 103 to process the facial characteristic data 321.

The facial characteristic data 321 can be obtained from the sensor 111 at any suitable time. In some examples the facial characteristic data 321 can be obtained from the sensors 111 while the message is being played back to the user or could be obtained a short time after the message has been played back. This can enable a facial response to the message to be detected.

The detected facial characteristic data 321 from the sensors 111 is provided to a select reaction module 323. The expected facial characteristic data 319 that has been determined from the predicted reaction set 315 is also provided to the select reaction modules 323. The select reaction module 323 can be configured to compare the detected facial characteristic data 321 from the sensors 111 with the expected facial characteristic data 319 that has been determined from the predicted reaction set 315. If there is a sufficient correlation between the detected facial characteristic data 321 and the expected facial characteristic data 317 for one of the reactions this can be used to select the reaction. If there is not a sufficient correlation between the detected facial characteristic data 321 and the expected facial characteristic data 317 for one of the reactions then the reaction is not selected.

The select reaction module 323 can use any suitable means to compare the detected facial characteristic data 321 with the expected facial characteristic data 319. In some examples a classification algorithm and/or a machine learning program could be used. The select reaction module 323 can be configured to assign a score to the reactions corresponding to the expected facial characteristic data 319 where the score indicates the correlation between the expected facial characteristic data 319 and the detected facial characteristic data 321. The reaction corresponding to the expected facial characteristic data 319 with the highest score can then be selected as the reaction.

The select reaction module 323 provides a selected reaction 325 as an output. The selected reaction can be transmitted from the communications device 103. The selected reaction can be transmitted in response t the message. The selected reaction 325 can be transmitted to the sender of the message and/or to other recipients of the message. The selected reaction 325 can enable a graphical item such as an emoji indicative of the selected reaction to be displayed in association with the message.

Fig. 4 shows a user 401 using an example of the disclosure. In this example the user 401 is wearing a peripheral device 105. The communications device 103 of the user 401 is not shown in Fig. 4.

The peripheral device 105 in the example of Fig. 4 is an ear piece 403. The ear piece 403 is positioned in the user's ear. This can enable the user 401 to hear sound signals that are played back by the ear piece 403.

In the example of Fig. 4 the peripheral device 105 is playing back message content 405. The message content 405 can comprise a message that has been received from a remote device 407. In this example the remote device 407 is a mobile phone that is being used by a different user 409. For instance, the first user 401 and the second user 409 could be exchanging messages using their respective mobile phones.

The user 405 can listen to the message content 405 using the ear piece 403. The user 405 might want to react to the message however they have limited user input means available to them because they are listening to the audio messages using the ear piece 403, therefore it might be difficult or inconvenient for the user to manually select a reaction.

Therefore, examples of the disclosure can be implemented to enable the reaction to be selected automatically. The reaction can be selected as described herein by using facial characteristic data relating to a pert of the user's head or face in combination with an analysis of the message. This can enable a reaction to be selected quickly and with a good level of accuracy without requiring too many computational resources.

The selection of the reaction can be implemented using an apparatus 107 in the peripheral device 105 or an apparatus in the communications device 103 of the user 401 or by using any other suitable means.

Once the reaction has been selected data 411 indicative of the selected reaction is transmitted to the remote device 407. This remote device 407 can then used the data 111 to display a graphical item 413 indicative of the selected reaction. In this example the graphical item is a smiley faced emoji 413. Other types of graphical items could be used in other examples.

Examples of the disclosure therefore enable a reaction to be selected automatically by a user 401. The selection of the reaction can be made without any specific user input. The selection of the reaction is made form a combination of the detected facial characteristics and an analysis if the received message. The use of the different types of data can improve the accuracy of the selection of the reactions. Also, this enables the reactions to be selected y monitoring only a part of the user's head or face. This can be more convenient for the user than requiring information to be collected from all of, or from a large part of their face. For example, this can enable sensors 111 that are already within peripheral devices 105 and used for other purposes such as monitoring acoustic response or eye tracking, to be used to collect the data relating to the facial characteristics.

Variations to the described examples could be used in implementations of the disclosure. For instance, in the described examples the message content is analysed to determine a predicted reaction. In some examples just a part of the message content could be analysed. In some examples sections of the message content could be analysed separately from each other. This could enable different reactions to be selected for different parts of the message. This could enable more than one reaction to be selected for a single message where different reactions are associated with different parts of the message.

As another variation, in the example of Fig. 3 a reaction set 315 is generated by the reaction prediction module 303. In some examples one or more predetermined reaction sets 315 could be available. In such cases rather than constructing the reaction sets 315 from all of the available reactions in the reaction database 311 the reaction prediction module 303 could select a reaction set 315 from a plurality of predetermined reaction sets 315. The predetermined reaction sets 315 could be stored in any suitable accessible location. This could reduce the processing requirements for implementing examples of the disclosure.

In some examples the detecting of the facial characteristics can be controlled so as to improve the differentiation of respective facial expressions. For instance, if the facial characteristic that is being monitored comprises the acoustic response of the ear canal then the reference signal that is used can be adapted to facilitate differentiation of different facial expressions. In such cases different reference signals could be used depending on the predicted facial expressions or any other suitable factor. This could be useful if the refence signal is in the audible range as it can reduce interference with the audio of the played back messages. The frequencies of the reference signals could be selected so as to provide acoustic responses with sufficiently large differences between respective predicted facial expressions. In some examples the timing of the reference signals could be controlled so as to improve differentiability of the facial expressions. For instance, different facial expression have different dynamic profiles and the reference signals could be timed so as to enable these dynamic profiles to be detected.

Fig. 5 schematically illustrates an apparatus 107 that can be used to implement examples of the disclosure. In this example the apparatus 107 comprises a controller 501. The controller 501 can be a chip or a chip-set. In some examples the controller 501 can be provided within a communications device or any other suitable type of device.

In the example of Fig. 5 the implementation of the controller 501 can be as controller circuitry. In some examples the controller 501 can be implemented in hardware alone, have certain aspects in software including firmware alone or can be a combination of hardware and software (including firmware).

As illustrated in Fig 5 the controller 501 can be implemented using instructions that enable hardware functionality, for example, by using executable instructions of a computer program 507 in a general-purpose or special-purpose processor 503 that may be stored on a computer readable storage medium (disk, memory etc.) to be executed by such a processor 503.

The processor 503 is configured to read from and write to the memory 505. The processor 503 can also comprise an output interface via which data and/or commands are output by the processor 503 and an input interface via which data and/or commands are input to the processor 503.

The memory 505 stores a computer program 507 comprising computer program instructions (computer program code) that controls the operation of the controller 501 when loaded into the processor 503. The computer program instructions, of the computer program 507, provide the logic and routines that enables the controller 501. to perform the methods illustrated in the accompanying Figs. The processor 503 by reading the memory 505 is able to load and execute the computer program 507.

The apparatus 107 comprises:
at least one processor 503; and
at least one memory 505 including computer program code 509;
the at least one memory 505 and the computer program code 509 configured to, with the at least one processor 503, cause the apparatus 107 at least to perform:
   analysing 201 a received message to determine one or more predicted reactions of a user to the message;
   obtaining 203 information relating to one or more detected facial characteristics of the user wherein the information relating to the one or more detected facial characteristics is obtained from at least one sensor that is configured to monitor a part of the user's head or face wherein the part does not comprise a complete facial feature;
   comparing 205 the information relating to the one or more facial characteristics to information indicative of the predicted reactions; and
   selecting 207 a reaction from the one or more predicted reactions based on the comparison.

The apparatus 107 comprises:
at least one processor 503]; and
at least one memory 505 including computer program code 509;
the at least one memory 505 storing instructions that, when executed by the at least one processor 503, cause the apparatus 107 at least to:
   analysing 201 a received message to determine one or more predicted reactions of a user to the message;
   obtaining 203 information relating to one or more detected facial characteristics of the user wherein the information relating to the one or more detected facial characteristics is obtained from at least one sensor that is configured to monitor a part of the user's head or face wherein the part does not comprise a complete facial feature;
   comparing 205 the information relating to the one or more facial characteristics to information indicative of the predicted reactions; and
   selecting 207 a reaction from the one or more predicted reactions based on the comparison.

As illustrated in Fig 5, the computer program 507 can arrive at the controller 501 via any suitable delivery mechanism 511. The delivery mechanism 511 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 507. The delivery mechanism can be a signal configured to reliably transfer the computer program 507. The controller 501 can propagate or transmit the computer program 507 as a computer data signal. In some examples the computer program 507 can be transmitted to the controller 501 using a wireless protocol such as Bluetooth, Bluetooth Low Energy, Bluetooth Smart, 6LoWPan (IPᵥ6 over low power personal area networks) ZigBee, ANT+, near field communication (NFC), Radio frequency identification, wireless local area network (wireless LAN) or any other suitable protocol.

The computer program 507 comprises computer program instructions for causing an apparatus to perform at least the following or for performing at least the following:
analysing 201 a received message to determine one or more predicted reactions of a user to the message;
obtaining 203 information relating to one or more detected facial characteristics of the user wherein the information relating to the one or more detected facial characteristics is obtained from at least one sensor that is configured to monitor a part of the user's head or face wherein the part does not comprise a complete facial feature;
comparing 205 the information relating to the one or more facial characteristics to information indicative of the predicted reactions; and
selecting 207 a reaction from the one or more predicted reactions based on the comparison.

The computer program instructions can be comprised in a computer program 507, a non-transitory computer readable medium, a computer program product, a machine readable medium. In some but not necessarily all examples, the computer program instructions can be distributed over more than one computer program 507.

Although the memory 505 is illustrated as a single component/circuitry it can be implemented as one or more separate components/circuitry some or all of which can be integrated/removable and/or can provide permanent/semi-permanent/ dynamic/cached storage.

Although the processor 503 is illustrated as a single component/circuitry it can be implemented as one or more separate components/circuitry some or all of which can be integrated/removable. The processor 503 can be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in Fig. 2 can represent steps in a method and/or sections of code in the computer program 507. The illustration of a particular order to the blocks does not necessarily imply that there is a required or preferred order for the blocks and the order and arrangement of the blocks can be varied. Furthermore, it can be possible for some blocks to be omitted.

In some examples machine learning can be used to implement examples of the disclosure. For instance, in some examples machine learning can be used to detect facial characteristics from the data obtain by the sensors 111 and/or to analyse the messages to determine predicted reactions and/or to perform any other suitable functions.

The machine learning can comprise a machine learning model. The machine learning model that is used can comprise a neural network or any other suitable type of trainable model. The term "Machine Learning" refers to any kind of artificial intelligence (Al), or other method that is trainable or tuneable using data. The machine learning model can comprise a computer program. The machine learning model can be trained to perform a task, such as detecting facial characteristics from the data obtain by the sensors 111 or to analysing the messages to determine predicted reactions, or any other suitable task, without being explicitly programmed to perform that task. The machine learning model can be configured to learn from experience E with respect to some class of tasks T and performance measure P if its performance at tasks in T, as measured by P, improves with experience E. In these examples the machine learning model can learn from previous facial characteristic date or message data or any other suitable data. The machine learning model can also be a trainable computer program. Other types of machine learning models could be used in other examples.

Any suitable process can be used to train the machine learning model. The training of the machine learning model can be performed using real world/or simulation data. The training data used to train the machine learning model can comprise historical data collected from the user and/or from messages and/or any other suitable source. The training of the machine learning model can be repeated as appropriate until the machine learning model has attained a sufficient level of stability. The machine learning model has a sufficient level of stability when fluctuations in the predictions provided by the machine learning model are low enough to enable the machine learning model to be used to perform the relevant tasks. The machine learning model has a sufficient level of stability when fluctuations in the outputs provided by the machine learning model are low enough so that the machine learning model provides consistent responses to test inputs.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
analysing a received message to determine one or more predicted reactions of a user to the message;
obtaining information relating to one or more detected facial characteristics of the user wherein the information relating to the one or more detected facial characteristics is obtained from at least one sensor that is configured to monitor a part of the user's head or face wherein the part does not comprise a complete facial feature;
comparing the information relating to the one or more facial characteristics to information indicative of the predicted reactions; and
selecting a reaction from the one or more predicted reactions based on the comparison.

2. An apparatus as claimed in claim 1 wherein the means are for enabling information indicative of the selected reaction to be transmitted.

3. An apparatus as claimed in any preceding claim wherein the information relating to one or more facial characteristics of the user are obtained from one or more sensors configured to monitor an acoustic response of the user's ear canal.

4. An apparatus as claimed in claim 3 wherein the acoustic response is obtained in response to a reference signal and wherein the reference signal is adapted to facilitate differentiation of different facial expressions.

5. An apparatus as claimed in any preceding claim wherein the information relating to one or more facial characteristics of the user are obtained from one or more sensors configured to obtain an image of part of a user's face.

6. An apparatus as claimed in any preceding claim wherein the one or more facial characteristics comprise one or more of:
the position of one or more facial features;
relative distances between two or more facial features;
movement of one or more facial features;
changes in size of one or more facial features;
changes in shape of one or more facial features.

7. An apparatus as claimed in any preceding claim wherein analysing the received message to determine one or more predicted reactions comprises analysing one or more of:
content of the message;
sender of the message;
previous responses to messages.

8. An apparatus as claimed in any preceding claim wherein the means are for determining expected facial characteristics associated with the predicted reactions.

9. An apparatus as claimed in claim 8 wherein comparing the information relating to the one or more facial characteristics to information indicative of the predicted reactions comprises comparing detected facial characteristics of the user with the expected facial characteristics associated with the predicted reactions.

10. An apparatus as claimed in any preceding claim wherein the selected reaction is represented as a graphical response to the message.

11. An apparatus as claimed in any preceding claim wherein the means are for determining if there is a correlation between the predicted reaction and the detected facial characteristics and if there is a sufficient correlation selecting the corresponding reaction and if there is not a sufficient correlation not making a selection of a predicted reaction.

12. A device comprising an apparatus as claimed in any preceding claim wherein the device is at least one of: a telephone, a camera, a computing device, a teleconferencing device, a virtual reality device, an augmented reality device, a headset.

13. A method comprising:
analysing a received message to determine one or more predicted reactions of a user to the message;
obtaining information relating to one or more detected facial characteristics of the user wherein the information relating to the one or more detected facial characteristics is obtained from at least one sensor that is configured to monitor a part of the user's head or face wherein the part does not comprise a complete facial feature;
comparing the information relating to the one or more facial characteristics to information indicative of the predicted reactions; and
selecting a reaction from the one or more predicted reactions based on the comparison.

14. A method as claimed in claim 13 comprising enabling information indicative of the selected reaction to be transmitted.

15. A computer program comprising instruction which, when executed by an apparatus, cause the apparatus to perform at least:
analysing a received message to determine one or more predicted reactions of a user to the message;
obtaining information relating to one or more detected facial characteristics of the user wherein the information relating to the one or more detected facial characteristics is obtained from at least one sensor that is configured to monitor a part of the user's head or face wherein the part does not comprise a complete facial feature;
comparing the information relating to the one or more facial characteristics to information indicative of the predicted reactions; and
selecting a reaction from the one or more predicted reactions based on the comparison.
